(19) Europäisches Patentamt
European Patent Office
Office européen des brevets

(11) EP 0 844 261 A1

(12) **EUROPÄISCHE PATENTANMELDUNG**

(43) Veröffentlichungstag:
**27.05.1998 Patentblatt 1998/22**

(51) Int. Cl.[6]: **C08G 18/83**, C08G 18/12, C08G 18/50, C08G 18/38

(21) Anmeldenummer: **97119152.3**

(22) Anmeldetag: **03.11.1997**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **21.11.1996 DE 19647982**

(71) Anmelder:
**BASF AKTIENGESELLSCHAFT**
**67056 Ludwigshafen (DE)**

(72) Erfinder:
- **Kokel, Nicolas, Dr.**
  **67069 Ludwigshafen (DE)**
- **Gulbins, Erich, Dr.**
  **69120 Heidelberg (DE)**
- **Rau, Maria Gyopar, Dr.**
  **67098 Bad Dürkheim (DE)**
- **Fischer, Gerhard**
  **67246 Dirmstein (DE)**

(54) **Dispersionen enthaltend Polyurethane mit Carbonylgruppen in Ketofunktion**

(57) Wässerige Dispersionen, enthaltend ein Polyurethan (A), mit Struktureinheiten, welche sich von Verbindungen der Formel (I)

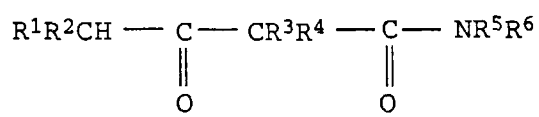

I

ableiten, in der die Substituenten die folgende Bedeutung haben:

$R^1$, $R^2$, $R^3$ jeweils Wasserstoff, $C_1$- bis $C_{24}$-Alkyl oder $C_6$- bis $C_{24}$-Alkenyl

$R^4$ Wasserstoff

$R^5$, $R^6$

a) gemeinsam $C_4$- bis $C_{10}$-Alkandiyl,

b) jeweils $C_2$- bis $C_{10}$-Alkyl, $C_5$- bis $C_8$-Cycloalkyl oder $C_7$- bis $C_{20}$-Aralkyl,

c) jeweils ein hydroxylterminiertes Poly-($C_2$- bis $C_4$-alkylenoxid), oder

d) ein Rest $R^5$ oder $R^6$ die unter (a) bis (c) angegebene Bedeutung und der andere Rest Wasserstoff oder ein Rest der Formel II

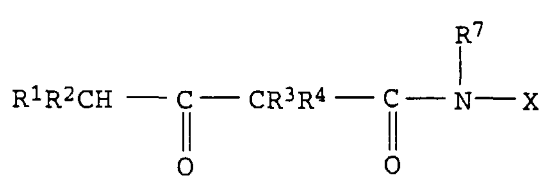

II

EP 0 844 261 A1

in der

X $C_2$- bis $C_6$-Alkandiyl bedeutet und

$R^7$ gleichbedeutend ist mit $R^5$ oder $R^6$ mit der Ausnahme, daß $R^7$ nicht ein Rest der Formel II bedeutet,

wobei

- die Reste $R^5$ und $R^6$ in jedem der Fälle (a) bis (d) insgesamt eine (1) an ein aliphatisches C-Atom gebundene Hydroxylgruppen tragen,
- gegebenenfalls der Rest $R^5$ und/oder $R^6$ 1 oder 2 aromatisch gebundene Hydroxylgruppen oder 1 Nitril-, tertiäre Amino-, Carbonsäure- oder Sulfonsäuregruppe, die gegebenenfalls in Form ihrer Salze vorliegen, trägt, und
- die mittlere Funktionalität (F) aller Aufbaukomponenten des Polyurethans (A), bezogen auf die Funktionalitäten, die beim Aufbau des Polyurethans (A) in einer Additionsreaktion miteinander reagieren, 1,5 bis 2,2 beträgt.

**Beschreibung**

Die vorliegende Erfindung betrifft wässerige Dispersionen, enthaltend ein Polyurethan (A), mit Struktureinheiten, welche sich von Verbindungen der Formel (I)

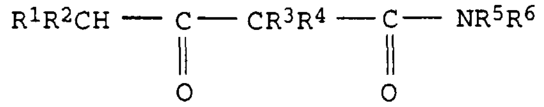

I

ableiten, in der die Substituenten die folgende Bedeutung haben:

$R^1$, $R^2$, $R^3$ jeweils Wasserstoff, $C_1$- bis $C_{24}$-Alkyl oder $C_6$- bis $C_{24}$-Alkenyl

$R^4$ Wasserstoff

$R^5$, $R^6$

a) gemeinsam $C_4$- bis $C_{10}$-Alkandiyl,

b) jeweils $C_2$- bis $C_{10}$-Alkyl, $C_5$- bis $C_8$-Cycloalkyl oder $C_7$- bis $C_{20}$-Aralkyl,

c) jeweils ein hydroxylterminiertes Poly-($C_2$- bis $C_4$-alkylenoxid), oder

d) ein Rest $R^5$ oder $R^6$ die unter (a) bis (c) angegebene Bedeutung und der andere Rest Wasserstoff oder ein Rest der Formel II

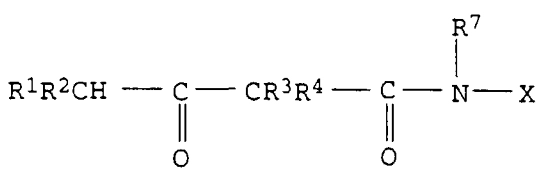

II

in der

X $C_2$- bis $C_6$-Alkandiyl bedeutet und

$R^7$ gleichbedeutend ist mit $R^5$ oder $R^6$ mit der Ausnahme, daß $R^7$ nicht ein Rest der Formel II bedeutet,

wobei

- die Reste $R^5$ und $R^6$ in jedem der Fälle (a) bis (d) insgesamt eine (1) an ein aliphatisches C-Atom gebundene Hydroxylgruppen tragen,
- gegebenenfalls der Rest $R^5$ und/oder $R^6$ 1 oder 2 aromatisch gebundene Hydroxylgruppen oder 1 Nitril-, tertiäre Amino-, Carbonsäure- oder Sulfonsäuregruppe, die gegebenenfalls in Form ihrer Salze vorliegen, trägt, und
- die mittlere Funktionalität (F) aller Aufbaukomponenten des Polyurethans (A), bezogen auf die Funktionalitäten, die beim Aufbau des Polyurethans (A) miteinander in einer Additionsreaktion miteinander reagieren, 1,5 bis 2,2 beträgt.

Wässerige Dispersionen, die Polyurethane enthalten, sind allgemein bekannt (vgl. D. G. Oertel "Kunststoff Handbuch 7", 2. Auflage, 1983, Carl Hanser Verlag München Wien, S. 24 bis 25 und S. 571 bis 574). Es ist weiterhin bekannt, die Polyurethandispersionen als Beschichtungsmittel, z.B. als Lacke oder Druckfarben zu verwenden.

In verarbeitungstechnischer und wirtschaftlicher Hinsicht und im Hinblick auf die wünschenswerten Eigenschaften

der mit den Lacken hergestellten Beschichtungen müssen dabei an die Polyurethandispersionen eine Reihe von Anforderungen gestellt werden, die bisher nicht in dem geforderten Maß erfüllt werden.

An Lacke werden häufig bezüglich der Gebrauchseigenschaften folgende Anforderungen gestellt:

- Die Lacke sollen über einen längeren Zeitraum lagerbar sein, ohne daß sich ihre Eigenschaften (z.B. rheologische Eigenschaften) oder die Eigenschaften der damit hergestellten Beschichtungen verändern und ohne Gas zu entwickeln, da die Gasentwicklung die Lagerung in fest verschlossenen Behälter praktisch unmöglich macht.

- Die Lacke sollen möglichst geringe Mengen an Lösungsmitteln, Verlaufsmitteln oder sonstigen leichtflüchtigen organischen Bestandteilen enthalten, um die Emissionen von organischen Verbindungen beim Auftragen und Trocknen der Lacke zu minimieren.

- Nach dem Auftragen auf das Werkstück soll der Lack rasch trocknen bzw. aushärten, damit es bereits nach kurzer Zeit gebrauchsfertig ist oder weiterverarbeitet werden kann.

- Bei der Verarbeitung der Lacke sollen sie möglichst wenig zum Schäumen neigen.

An qualitativ hochwertige Beschichtungen und Oberflächen aus Polyurethanlacken werden in Kombination folgende Anforderungen gestellt:

- Glatte Oberfläche und ein hoher Glanz

- Resistenz gegenüber Feuchtigkeit, Wasserdampf und Chemikalien wie verdünnte Laugen und Säuren sowie organischen Lösungsmitteln oder Tensiden

- Unempfindlichkeit gegenüber mechanischen Beanspruchungen wie Schlag, Stoß oder Reibung

- Keine Eigenfarbe oder Störstellen wie Blasen oder Risse

- Im Fall von Holz als Substrat sollen die Lacke die sichtbare Strukturierung des Holzes stärker hervortreten lassen (Anfeuerung)

Die Entwicklung von Beschichtungen mit einer derartigen Eigenschaftskombination ist dadurch erschwert, daß den einzelnen anwendungstechnischen Eigenschaften divergierende strukturelle Eigenschaften zugrunde zu liegen scheinen. Während die Abriebsfestigkeit eine gewisse Härte voraussetzt, erfordert die Schlagfestigkeit eine gewisse Elastizität. Weiterhin setzt eine glänzende Oberfläche einen guten Verlauf des Lacks voraus, was im allgemeinen den Einsatz von flüchtigen organischen Verbindungen als Verlaufsmittel voraussetzt.

Insbesondere sollen sich die Lacke nach einer möglichst großen Anzahl üblicher Verfahren verarbeiten lassen. Die verschiedenen mit unterschiedlichem Aufwand verbundenen Verfahren, wobei der Aufwand mit der Qualität der damit hergestellten Überzüge korreliert, werden benötigt, um auf möglichst wirtschaftliche Weise Überzüge herstellen zu können, die einem ganz bestimmten Qualitätsniveau genügen; denn ein erhöhter Aufwand erscheint oft nur dann gerechtfertigt, wenn das entsprechende Qualitätsniveau auch honoriert wird. Andererseits ist es für den Verarbeiter mit erheblichem logistischem Aufwand verbunden, für jede Art der Verarbeitung einen anderen Lackrohstoff bereitzuhalten. Eine besonders große Rolle spielen dabei die folgenden Verarbeitungsverfahren:

Das Verfahren der Kalthärtung (Aushärtung des Überzuges bei Raumtemperatur) mit einem Einkomponenten-Lacksystem ist das am wenigsten aufwendige und soll mittleren Qualitätsansprüchen genügen. Das Verfahren der Kalthärtung mit einem Zweikomponenten-Lacksystem, das wegen der vom Verarbeiter vorzunehmenden Abmischung des Lacksystems und der eng begrenzten Verarbeitungszeit der Abmischung für ihn mit erhöhtem Aufwand verbunden ist, soll gehobenen Qualitätsansprüchen genügen.

Das Einbrennverfahren (Aushärtung bei Temperaturen von üblicherweise 100 bis 160°C) ist für die Herstellung von Überzügen mit höchstem Qualitätsniveau geeignet.

Druckfarben sollen üblicherweise hinsichtlich der Gebrauchseigenschaften denselben Anforderungen genügen, die bereits bei den Lacken angeführt wurden. Daneben ist die Erfüllung weiterer für Druckfarben spezifischer Anforderungen wichtig:

- hoher Anteil an Feststoffen und insbesondere Pigmenten, damit die Trocknungszeiten möglichst gering sind und

- guter Verlauf auch auf unpolaren Substraten wie Polyethylen und Polypropylen

Erfordernisse, die mit den Druckfarben bedruckte Gegenstände, insbesondere solche aus unpolaren Kunststoffen erfüllen sollen sind:

- Gute Haftung der Farben auf dem Substrat insbesondere bei Einwirkung von Wasser
- Beständigkeit der Farben gegenüber üblichen Lösungsmitteln, Fetten, Ölen, Tensiden, wässerigen Lösungen, Säuren und Laugen
- gute Echtheiten

Auch bei diesem Anforderungsprofil ergeben sich teilweise Zielkonflikte, die mit den Druckfarben des Standes der Technik nur unzureichend gelöst sind. Es ist beispielsweise bekannt, daß der Verlauf der Druckfarben durch Tensidzusatz verbessert werden kann, jedoch weisen die applizierten Farben eine mangelnde Wasser festigkeit auf. Durch Lösungsmittelzusatz läßt sich die Benetzbarkeit ebenfalls verbessern, wodurch jedoch die ökologischen Vorteile der Wasserfarben eingeschränkt werden.

Polyurethandispersionen, die als Einkomponenten-Systeme zur Beschichtung unterschiedlicher Substrate einsetzbar sind, werden in der EP-B-0332326 beschrieben. Sie enthalten neben einem wasserdispergierbaren Polyurethan mit einem Molekulargewicht von mehr als 2000, das Carbonylgruppen in Keto- oder Aldehydfunktion trägt, eine weitere Komponente, die Hydrazin- oder Hydrazongruppen trägt oder das Polyurethan trägt zusätzlich zu den Carbonylgruppen in Keto- oder Aldehydfunktion Hydrazin- bzw. Hydrazongruppen. Um das Strukturelement der Carbonylgruppen in das Polyurethan einzufügen, wird empfohlen, bei dessen Herstellung Monomere wie Dihydroxyaceton, das Michael-Addukt aus Diacetonacrylamid mit Diamin oder Alkanolamin oder das Michael-Addukt aus 2 mol Diacetonacrylamid mit 2 mol Diamin einzusetzen.

Nachteilig an den unter Verwendung von Dihydroxyaceton hergestellten Dispersionen ist jedoch, daß die mit ihnen hergestellten Filme braun gefärbt sind.

Weiterhin wird in dieser Schrift vorgeschlagen, Ketogruppen in das Polyurethan einzubauen, indem man als Monomere solche wie das Michael-Addukt aus Diacetonacrylamid und Diethanolamin verwendet. Diese lassen sich zwar nach dem Verfahren der Kalthärtung als Einkomponentensystem zu Überzügen mit befriedigenden Eigenschaften verarbeiten, eignen sich jedoch nicht als Komponente in Zweikomponenten-Systemen zur Herstellung von Überzügen mit einem gehobenen Eigenschaftsniveau. Auch die Verarbeitung nach dem Einbrennverfahren liefert keine Beschichtungen, die hohen Ansprüchen genügen.

Weiterhin sind wässerige Dispersionen, die ein wasserdispergierbares Polyurethan mit Carbonylgruppen und ein Polyhydrazid enthalten, aus der DE-A-3 837 519 bekannt. Nach dieser Lehre wird die Carbonylfunktion in das Polyurethan eingefügt, indem man bei ihrer Herstellung Carbonylgruppen enthaltende Mono- oder Polyalkohole einsetzt, z.B. Monohydroxyalkylketone wie Hydroxyaceton, Hydroxybenzaldehyd, Acetoin, Benzoin, Addukte von Diepoxiden und Ketocarbonsäuren sowie Ketocarbonsäureester mit mindestens einer Hydroxylgruppe. In dieser Druckschrift wird auch empfohlen, diese Dispersionen als Lack oder Druckfarbe einzusetzen.

Diese Monomere lassen sich ohne weiteres nicht verwenden, da Probleme wie geringe Reaktivität, Polymerfarbe oder Stabilität der Dispersion auftreten.

Die zwei oben genannten Verbindungsklassen weisen den zusätzlichen Nachteil auf, daß sie nur für eine sehr begrenzte Zahl von Vernetzungsmöglichkeiten brauchbar sind.

Weiterhin gehören zu den Ketomonomeren mit einer oder mehreren alkoholischen Hydroxylgruppen, die in der DE 38 37 519 beschrieben sind, Ester aus Brenztrauben-, Acetessig- oder Lävulinsäure und Polyolen. Ein wesentlicher Nachteil bei der Verwendung dieser Esterderivate ist deren Hydrolyseempfindlichkeit in der daraus hergestellten Dispersion. Bei Lagerung wird allmählich die freie Säure abgespalten, wodurch sich die Vernetzungseffizienz verringert. Beim hydrolytischen Abbau von Acetessigesteralkohol enthaltenden Dispersionen erfolgt Gasbildung. Eine Lagerung dieser Dispersionen in geschlossenen Behältern ist folglich mit einem erheblichen Gefahrenpotential verbunden. Der Lävulinester weist darüberhinaus eine verminderte Reaktivität auf, da die Ketocarbonylgruppe keine aktivierende Gruppe in der direkten Nachbarschaft besitzt. Mit dem Brenztraubensäureester entstehen farbige Polymere.

In der DE-A-4 406 547 sind vernetzbare, mit olefinischen Doppelbindungen und CH-aciden Gruppen funktionalisierte Polyurethane, die in Wasser dispergiert vorliegen, beschrieben. Zu deren Herstellung wird ein hydroxylterminiertes, im wesentlichen lineares und lösemittelfreies Polyurethan mit einem niedermolekularen Ester umgesetzt. Durch Umesterung entstehen Polyurethane mit endständigen β-funktionellen Estergruppierungen.

Dieses Verfahren ist nicht allgemein brauchbar, da zum Beispiel "härtere" oder verzweigte Polyurethane, die eine hohe Viskosität aufweisen nicht ohne die Verwendung eines Lösemittels zur Viskositätssenkung modifiziert werden können. Niedersiedende Lösemittel, die von der Dispersion destillativ entfernbar wären, sind nicht brauchbar, da die für die Umesterungsstufe benötigte Temperatur nicht erreicht werden kann. Ist das Lösemittel höhersiedend, dann kann es nicht mehr von der Dispersion entfernt werden.

Selbst bei Anwendung von Temperaturen, die so hoch sind, daß es bereits zu einer thermischen Schädigung des Polyurethans kommt, kann eine komplette Umsetzung aller Hydroxylgruppen des Polyurethans nicht gewährleistet werden, wie dies auch aus dem Artikel "Novel synthesis of low VOC polymeric dispersions and their application in waterborne coatings" in 21th Int. Conf. Organ. Coat. Sci. Technol. ATHEN, Seite 55-68 (1995), insbesondere S. 60, von B. Vogt-Birnbrich hervorgeht.

Die nach diesem Verfahren erhaltenen Dispersionen weisen ferner ebenfalls eine hohe Hydrolyseanfälligkeit auf und entwickeln bei der Lagerung Gas.

Beschichtungen aus Dispersionen, die ein Polyurethan enthalten, das aus den erwähnten Hydroxycarbonylverbindungen aufgebaut sind, können zudem, was die mechanischen Eigenschaften und die Beständigkeit gegenüber Lösungsmitteln betrifft, ebenfalls noch nicht vollständig befriedigen. Zudem neigen diese Dispersionen zur Koagulatbildung.

Die nicht vorveröffentlichte deutsche Patentanmeldung mit dem Aktenzeichen 19618675.7 beschreibt wässerige Dispersionen, die ein Polyurethan enthalten, das ebenfalls aus Alkoholen mit Carbonylgruppen in Ketofunktion aufgebaut ist. Diese dort vorgeschlagenen Alkohole unterscheiden sich von den in der hier vorliegenden Erfindung verwendeten in der Zahl der Alkoholgruppen. Es handelt sich dort um mehrfunktionelle Alkohole.

Die Aufgabe der vorliegenden Erfindung bestand daher darin, wässerige Lacke mit einem insgesamt hohen anwendungstechnischen Niveau zur Verfügung zu stellen, die die Mängel des Standes der Technik nicht aufweisen und bei deren Verarbeitung zu glänzenden stark beanspruchbaren Beschichtungen keine oder nur relativ geringe Mengen an flüchtigen Verlaufshilfsmittel eingesetzt werden müssen. Insbesondere sollen die Lacke möglichst flexibel einsetzbar sein, d.h. daß das mit ihnen erreichbare Eigenschaftsniveau der Überzüge bei Anwendung verschiedener Verarbeitungsverfahren nicht hinter dem des Standes der Technik zurückbleiben soll.

Weiterhin bestand die Aufgabe darin, Druckfarben bereitzustellen, die die Mängel des Standes der Technik nicht aufweisen und mit denen sich auch insbesondere bedruckte unpolare Substrate herstellen lassen, auf denen die Farbe beständig haftet.

Demgemäß wurden die vorstehend beschriebenen Dispersionen gefunden.

Die Dispersionen enthalten ein Polyurethan (A), welches aufgebaut ist aus Verbindungen der Formel (I),

$$R^1R^2CH-\underset{\underset{O}{\|}}{C}-CR^3R^4-\underset{\underset{O}{\|}}{C}-NR^5R^6 \qquad I$$

in der die Substituenten im allgemeinen die folgende Bedeutung haben:

$R^1$, $R^2$, $R^3$ jeweils Wasserstoff, $C_1$- bis $C_{24}$-Alkyl oder $C_6$- bis $C_{24}$-Alkenyl

$R^4$ Wasserstoff,

$R^5$, $R^6$

a) gemeinsam $C_4$- bis $C_{10}$-Alkandiyl, bevorzugt Butan-1,4-diyl und Pentan-1,5-diyl,

b) jeweils $C_2$- bis $C_{10}$-Alkyl, besonders bevorzugt $C_2$- und $C_3$-Alkyl oder $C_5$- bis $C_8$-Cycloalkyl, bevorzugt Cyclopentyl oder Cyclohexyl oder $C_7$- bis $C_{20}$-Aralkyl, bevorzugt Benzyl,

c) jeweils ein hydroxylterminiertes Poly-($C_2$- bis $C_4$-alkylenoxid), bevorzugt ein Rest der Formel III,

$$-\left(CH_2-\underset{|}{\overset{R^8}{CH}}-O\right)_n-H \qquad III$$

in der

$R^8$ Wasserstoff, Methyl und/oder Ethyl und

n 1 bis 10 bedeutet
oder

d) ein Rest $R^5$ oder $R^6$ die unter (a) bis (c) angegebene Bedeutung und der andere Rest Wasserstoff oder ein Rest der Formel II

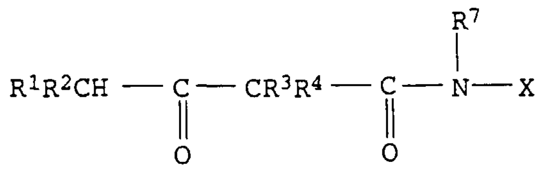

II

in der

X $C_2$- bis $C_6$-Alkandiyl und

$R^7$ die gleiche Bedeutung wie $R^5$ oder $R^6$ mit Ausnahme des Restes der Formel II bedeutet

wobei

- die Reste $R^5$ und $R^6$ gemeinsam eine (1) ("eine" hier als Numeral verwendet) an ein aliphatisches C-Atom gebundene Hydroxylgruppe tragen und

- gegebenenfalls der Rest $R^5$ und/oder $R^6$ 1 oder 2 aromatisch gebundene Hydroxylgruppen oder 1 Nitril-, tertiäre Amino-, Carbonsäure- oder Sulfonsäuregruppe, die gegebenenfalls in Form ihrer Salze vorliegen, trägt, wobei die mittlere Funktionalität (F) aller Aufbaukomponenten, bezogen auf die Funktionalitäten, die beim Aufbau des Polyurethans zusammentreten, 1,5 bis 2,2, bevorzugt 1,7 bis 2,0, besonders bevorzugt 1,8 bis 1,95 beträgt.

Dem Fachmann auf dem Polyurethangebiet ist allgemein bekannt, daß sich durch die Wahl der mittleren Funktionalität der Einsatzstoffe, die miteinander in einer Additionsreaktion zu Urethan oder Harnstoffgruppen reagieren, d.h. solchen mit Isocyanat-, Alkohol-, primären Amin- und sekundären Amingruppen das Molekulargewicht steuern läßt. Da die Verbindungen der Formel (I) in Bezug auf den Aufbau der Polymerkette des Polyurethans monofunktionell sind, wird es im allgemeinen erforderlich sein, neben den üblicherweise verwendeten difunktionellen Einsatzstoffen auch tri- und höherfunktionelle Verbindungen einzusetzen.

Die mittlere Funktionalität (F) ist definiert durch den Quotienten

$$F = \frac{\text{Molzahl aller Isocyanatgruppen und mit Isocyanat reaktiven Gruppen}}{\text{Molzahl aller Aufbaukomponenten}}$$

Bei den funktionellen Gruppen, die bei der Berechnung von F berücksichtigt werden, handelt es sich nicht nur um Isocyanat-, und an aliphatische C-Atome gebundene Alkoholgruppen, sondern auch um andere mit Isocyanaten in einer Additionsreaktion reagierende Gruppen, die ähnlich schnell oder schneller als diese Alkohole reagieren, also z.B. primäre Amin- und sekundäre Amingruppen. Wegen ihrer größeren Reaktionsträgheit werden jedoch Hydroxycarbonylgruppen und aromatisch gebundene Hydroxylgruppen nicht berücksichtigt.

Im Hinblick auf die gewünschte Vernetzungsdichte und die davon abhängigen mechanischen Eigenschaften wird der Gehalt der Carbonylgruppen der von den Verbindungen der Formel (I) abgeleiteten Strukturelemente in dem Polyurethan so gewählt, daß im allgemeinen 3 bis 140, bevorzugt 6 bis 100, besonders bevorzugt 10 bis 90 mmol dieser Gruppen pro 100g Polyurethan vorhanden sind.

Die Herstellung der erfindungsgemäßen wässerigen Dispersionen erfolgt üblicherweise durch

I. Herstellung eines Polyurethans durch Umsetzung von

a) mehrwertigen Isocyanaten mit 4 bis 30 C-Atomen,

b) Polyolen, von denen

b1) 10 bis 100 mol-%, bezogen auf die Gesamtmenge der Polyole (b), ein Molekulargewicht von 500 bis 5000 aufweisen und

b2) 0 bis 90 mol-%, bezogen auf die Gesamtmenge der Polyole (b), difunktionell sind und ein Molekulargewicht von 62 bis 500 g/mol aufweisen,

c) Verbindungen der Formel I,

d) gegebenenfalls weiteren von den Monomeren (b) und (c) verschiedenen mehrwertigen Verbindungen mit reaktiven Gruppen, bei denen es sich um alkoholische Hydroxylgruppen oder primäre oder sekundäre Aminogruppen handelt und

e) von den Monomeren (a), (b), (c) und (d) verschiedene Monomere mit wenigstens einer Isocyanatgruppe oder wenigstens einer gegenüber Isocyanatgruppen reaktiven Gruppe, die darüberhinaus wenigstens eine hydrophile Gruppe oder eine potentiell hydrophile Gruppe tragen, wodurch die Wasserdispergierbarkeit der Polyurethane bewirkt wird.

II. Dispergierung des in Schritt I erhaltenen Polyurethans in Wasser.

Als Monomere (a) kommen die üblicherweise in der Polyurethanchemie eingesetzten Polyisocyanate in Betracht.

Insbesondere zu nennen sind Diisocyanate $X(NCO)_2$, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, Tetramethylxylylendiisocyanat (TMXDI), 2,4'-Diisocyanato-diphenylmethan, p-Xylylendiisocyanat, die Isomeren des Bis-(4-isocyanatocyclohexyl)methans wie das trans/trans-, das cis/cis- und das cis/trans-Isomere sowie aus diesen Verbindungen bestehende Gemische.

Als Gemische dieser Isocyanate sind besonders die Mischungen der jeweiligen Strukturisomeren von Diisocyanatotoluol und Diisocyanato-diphenylmethan von Bedeutung, insbesondere die Mischung aus 80 mol-% 2,4 Diisocyanatotoluol und 20 mol-% 2,6-Diisocyanatotoluol geeignet. Weiterhin sind die Mischungen von aromatischen Isocyanaten wie 2,4 Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Als Verbindungen (a) kann man auch Isocyanate einsetzen, die neben den freien Isocyanatgruppen weitere verkappte Isocyanatgruppen, z.B. Uretdion- oder Carbodiimidgruppen tragen.

Gegebenenfalls können auch solche Isocyanate mitverwendet werden, die nur eine Isocyanatgruppe tragen. Im allgemeinen beträgt ihr Anteil maximal 10 mol-%, bezogen auf die gesamte Molmenge der Monomere. Die Monoisocyanate tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzungen des Polyurethans ermöglichen. In Betracht kommen hierfür Monomere wie Isopropenyl-$\alpha,\alpha$-dimethylbenzylisocyanat (TMI).

Zur Erhöhung der mittleren Funktionalität (F) können z.B. dreiwertige und vierwertige Isocyanate eingesetzt werden. Derartige Isocyanate werden z.B. erhalten, indem man zweiwertige Isocyanate miteinander umsetzt, indem man einen Teil ihrer Isocyanatgruppen zu Allophanat-, Biuret- oder Isocyanurat-Gruppen derivatisiert. Handelsübliche Verbindungen sind beispielsweise das Isocyanurat oder das Biuret des Hexamethylendiisocyanats.

Weitere geeignete höherfunktionelle Polyisocyanate sind z.B. Urethangruppen aufweisende Polyisocyanate auf Basis von 2,4- und/oder 2,6-Diisocyanatotoluol, Isophorondiisocyanat oder tetramethylendiisocyanat einerseits und niedermolekularen Polyhydroxyverbindungen wie Trimethylolpropan andererseits.

Im Hinblick auf gute Filmbildung und Elastizität kommen als Polyole (b) vornehmlich höhermolekulare Polyole, bevorzugt Diole (b1) in Betracht, die ein Molekulargewicht von etwa 500 bis 5000, vorzugsweise von etwa 1000 bis 3000 g/mol haben.

Bei den Polyolen (b1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien

Polycarbonsäuren können auch die entsprechenden Polycarbonsäureanhydride oder entsprechenden Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- $(CH_2)_y$-COOH, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Als mehrwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)cyclohexane wie 1,4-Bis-(hydroxymethyl)cyclohexan, 2-Methylpropan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Neopentylglykol und Alkohole der allgemeinen Formel HO-$(CH_2)_x$-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12- diol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-$(CH_2)_z$-COOH ableiten, wobei z eine Zahl von 1 bis 20 ist. Beispiele sind ε-Caprolacton, β-Propiolacton, γ-Butyrolacton und/oder Methyl-ε-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt werden. Anstelle der Polymerisate von Lactonen können auch die entsprechenden, chemisch äquivalenten Polykondensate der den Lactonen entsprechenden Hydroxycarbonsäuren eingesetzt werden.

Die Polyesterole können auch aus untergeordheten Mengen an Mono- und/oder höherfunktionellen Monomeren aufgebaut sein.

Daneben kommen als Monomere (b1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. In Gegenwart von $BF_3$ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)propan oder Anilin erhältlich. Besonders bevorzugt ist Polytetrahydrofuran eines Molekulargewichts von 240 bis 5000, und vor allem 500 bis 4500.

Ebenfalls geeignet sind Polyhydroxyolefine, bevorzugt solche mit 2 endständigen Hydroxylgruppen, z.B. α-w-Dihydroxypolybutadien, α-w-Dihydroxypolymethacrylester oder α-w-Dihydroxypolyacrylester als Monomere (b1). Solche Verbindungen sind beispielsweise aus er EP-A-0622378 bekannt. Weitere geeignete Polyole sind Polyacetale, Polysiloxane und Alkydharze.

Die Polyole können auch als Gemische in beliebigen Verhältnissen eingesetzt werden.

Die Härte und der Elastizitätsmodul der Polyurethane läßt sich erhöhen, wenn als Polyole (b) neben den Polyolen (b1) noch niedermolekulare Diole (b2) mit einem Molekulargewicht von etwa 62 bis 500, vorzugsweise von 62 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, wobei Neopentylglycol und die unverzweigten Diole mit 2 bis 12 C-Atomen und einer geradzahligen Anzahl von C-Atomen bevorzugt werden.

Bevorzugt beträgt der Anteil der Polyole (b1), bezogen auf die Gesamtmenge der Polyole (b) 10 bis 100 mol-% und der Anteil der Monomere (b2), bezogen auf die Gesamtmenge der Polyole (b) 0 bis 90 mol-%. Besonders bevorzugt beträgt das Verhältnis der Polyole (b1) zu den Monomeren (b2) 0,2 : 1 bis 5:1, besonders bevorzugt 0,5 : 1 bis 4 : 1.

Als Komponente (c) eigenen sich vor allem Verbindungen der Formel (I).

Die Verbindungen der Formel (I) sind erhältlich, indem man ein Diketen der Formel (IV)

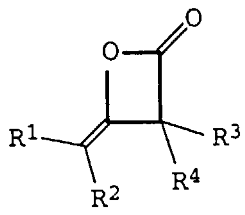

IV

mit einem Alkanolamin der Formel (V) in einer Additionsreaktion umsetzt.

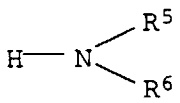

V

Bei den Diketenen der Formel (IV) bzw. den Aminen der Formel (V) haben die Reste $R^1$,$R^2$,$R^3$ und $R^4$ bzw. die Reste $R^5$,$R^6$ und $R^7$ die bei der Verbindung der Formel (I) angegebene Bedeutung.

Besonders bevorzugt wird ein Diketen eingesetzt, bei dem die Reste $R^1$, $R^2$ und $R^3$ Wasserstoff oder einer der Reste $R^1$ oder $R^2$ Wasserstoff und der andere Rest $R^1$ oder $R^2$ und der Rest $R^3$ ein linearer, gesättigter, nicht substituierter Hexadecylrest bedeuten.

Besonders bevorzugte Alkanolamine sind Ethanolamin, N-Methylethanolamin, N-Ethyl-ethanolamin, N-Butyl-ethanolamin, N-Cyclohexyl-ethanolamin, N-terButyl-ethanolamin, Leucinol, Isoleucinol, Valinol, Prolinol, Hydroxyethylanilin, 2-(Hydroxymethyl)-piperidin, 3-(Hydroxymethyl)-piperidin, 2-(2-Hydroxyethyl)-piperidin, 2-Amino-2-phenylethanol, 2-Amino-1-phenylethanol, Ephedrin, p-Hydroxyephedrin, Norephedrin, Adrenalin, Noradrenalin, Serin, Isoserin, Phenylserin, 1,2-Diphenyl-2-Amino-ethanol, 3-Amino-1-propanol, 2-Amino-1-propanol, 2-Amino-2-methyl-1-propanol, Isopropanolamin, N-Ethyl-isopropanolamin, 2-Amino-3-Phenylpropanol, 4-Amino-1-butanol, 2-Amino-1-butanol, 2-Aminoisobutanol, Neopentanolamin, 2-Amino-1-pentanol, 5-Amino-1-pentanol, 2-Ethyl-2-butyl-5-aminopentanol, 6-Amino-1-hexanol, 2-Amino-1-hexanol, 2-(2-Aminoethoxy)-ethanol, 3-(Aminomethyl)-3,5,5-trimethylcyclohexanol, 2-Aminobenzylalkohol, 3-Amino-benzylalkohol, 2-Amino-5-methylbenzylalkohol, 2-Amino-3-methylbenzylalkohol, 3-Amino-2-methylbenzylalkohol, 3-Amino-4-methylbenzylalkohol, 3-Amino--methylbenzylalkohol, 1-Aminoethyl-4-hydroxybenzylalkohol, 2-(4-Aminophenyl)-ethanol, 2-(2-Aminophenyl)-ethanol, 1-(3-Aminophenyl)-ethanol, Serin, Homoserin, Threonin, Ethanolaminessigsäure, 4-Amino-3-hydroxy-buttersäure, N-(2-Hydroxyethyl)-glycinnitril, 4-(2-Hydroxyethyl)-piperazin und 1-Amino-4-(2-hydroxyethyl)-piperazin, 2-Hydrazinoethanol oder Diaminomonoole , wie N-(2-Aminoethyl)-ethanolamin, 1-[2-(2-Hydroxyethoxy)-ethyl]-piperazin, 1,3-Diamino-2-propanol können ebenfalls eingesetzt werden.

Bevorzugte Addukte der Formel I sind solche aus dem Diketen bei dem die Reste $R^1$, $R^2$ und $R^3$ Wasserstoff bedeuten. Besonders bevorzugt ist $CH_3$-C(=O)-$CH_2$-C(C=O)-NH-$CH_2$-$CH_2$-OH.

Die Herstellung der Verbindungen der Formel (I) kann beispielsweise auf die Art und Weise erfolgen, wie es für die Acetessigsäureamid-Derivate in den Patentschriften DE 1 142 859 oder GB 715 896 beschrieben ist.

Die Monomere (d), die von den Komponenten (b) und Diolen (c) verschieden sind, dienen im allgemeinen der Erhöhung der mittleren Funktionalität (F). Es sind im allgemeinen mehr als zweiwertige nicht-aromatische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen

Alkohole mit einer höheren Wertigkeit als 2 sind z.B. Trimethylolpropan, pentaerythrit Glycerin oder Zucker und deren Ethoxylierungsprodukte.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von verzweigten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei primäre, zwei sekundäre oder eine primäre und eine sekundäre Aminogruppe enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin, Triethylentetramin oder 1,8-Diamino-4-aminomethyloctan.

Die Amine können auch in blockierter Form, z.B. in Form der entsprechenden Ketimine (siehe z.B. CA-1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Die Polyurethane enthalten bevorzugt kein Polyamin oder 1 bis 10, besonders bevorzugt 1,5 bis 5 mol-%, bezogen auf die Gesamtmenge der Komponenten (b), (c) und (d) eines Polyamins mit mindestens 2 gegenüber Isocyanaten reaktiven Aminogruppen als Monomere (d).

Ferner können zum Kettenabbruch in untergeordneten Mengen, d.h. bevorzugt in Mengen von weniger als 10 mol-%, bezogen auf die Komponenten (b) und (d), Monoalkohole eingesetzt werden. Ihre Funktion ist im allgemeinen ähnlich wie die der Monoisocyanate, d.h. sie dienen hauptsächlich zur Funktionalisierung des Polyurethans mit radikalisch polymerisierbaren C=C-Doppelbindungen.

Um die Wasserdispergierbarkeit der Polyurethane zu erreichen, sind die Polyurethane neben den Komponenten (a), (b), (c) und (d) aus von den Komponenten (a), (b), (c) und (d) verschiedenen Monomere (e), die wenigstens eine Isocyanatgruppe oder wenigstens eine gegenüber Isocyanatgruppen reaktive Gruppe und darüberhinaus wenigstens eine hydrophile Gruppe oder eine Gruppe, die sich in hydrophile Gruppen überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer, als die funktionellen Gruppen der Monomere, die zum Aufbau der Polymerhauptkette dienen.

Der Anteil der Komponenten mit (potentiell) hydrophilen Gruppen an der Gesamtmenge der Komponenten (a), (b), (c), (d) und (e) wird im allgemeinen so bemessen, daß die Molmenge der (potentiell) hydrophilen Gruppen, bezogen auf die Gewichtsmenge aller Monomere (a) bis (e), 30 bis 1000, bevorzugt 50 bis 500 und besonders bevorzugt 80 bis 400 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (e).

Bevorzugte Monomere mit nichtionischen hydrophilen Gruppen sind die Reaktionsprodukte aus einem Polyethylenglykol und einem Diisocyanat, die einen endständig veretherten Polyethylenglykolrest tragen. Derartige Diisocyanate sowie Verfahren zu deren Herstellung sind in den Patentschriften US 3 905 929 und US 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen, Anhydridgruppen oder tertiäre Aminogruppen.

(Potentiell) ionische Monomere (e) sind z.B. in Ullmanns Encykıopädie der technischen Chemie, 4. Auflage, Band 19, S. 311-313 und beispielsweise in der DE-A-1 495 745 ausführlich beschrieben.

Als (potentiell) kationische Monomere (e) sind vor allem Monomere mit tertiären Aminogruppen von besonderer praktischer Bedeutung, beispielsweise: Tris-(hydroxyalkyl)-amine, N,N'-Bis(hydroxyalkyl) -alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 2 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin, oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie $C_1$- bis $C_6$-Alkylhalogeniden, z.B. Bromiden oder Chloriden in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind

Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel VI

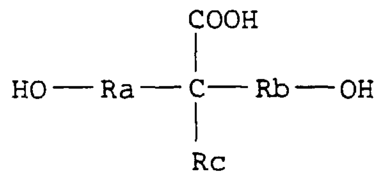

VI

in welcher $R^a$ und $R^b$ für eine $C_1$- bis $C_4$-Alkandiyl-Einheit und $R^c$ für eine $C_1$- bis $C_4$-Alkyl-Einheit steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Polyole (b1) geeignet.

Als Monomere (e) mit gegenüber Isocyanaten reaktiven Aminogruppen kommen Aminocarbonsäuren wie Lysin, β-Alanin, die in der DE-A2034479 genannten Addukte von aliphatischen diprimären Diaminen an α,β-ungesättigte Carbonsäuren wie die N-(2-Aminoethyl)-2-aminoethancarbonsäure sowie die entsprechenden N-Aminoalkyl-aminoalkylcarbonsäuren, wobei die Alkandiyl-Einheiten aus 2 bis 6 Kohlenstoffatome bestehen, in Betracht.

Sofern Monomere mit potentiell ionische Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Carboxylatgruppen in Form ihrer Salze mit einem Alkaliion oder einem Ammoniumion als Gegenion vor.

Wirksame Mengen von Verbindungen, die denen der Formel (I) strukturell verwandt sind und sich von denen der Formel (I) ausschließlich darin unterscheiden, daß die Reste R nicht nur eine (1) sondern 2 bis 5 an aliphatische C-Atome gebundene Hydroxylgruppen tragen, werden zur Herstellung der erfindungsgemäßen Polyurethane (A) nicht in wirksamen Mengen und bevorzugt überhaupt nicht eingesetzt. Diese den der Formel (I) strukturell verwandten Verbindungen sind in der nicht vorveröffentlichten deutschen Anmeldung mit dem Aktenzeichen 19618675.7 beschrieben.

Normalerweise werden die Komponenten (a), (b), (c), (d) und (e) sowie ihre jeweiligen Molmengen so gewählt, daß das Verhältnis A : B mit

A) der Molmenge an Isocyanatgruppen und

B) der Summe aus der Molmenge der Hydroxylgruppen und der Molmenge der funktionellen Gruppen, die mit Isocyanaten in einer Additionsreaktion reagieren können.

0,5 : 1 bis 2 : 1, bevorzugt 0,8 : 1 bis 1,5:1, besonders bevorzugt 0,9 : 1 bis 1,2 : 1 beträgt. Ganz besonders bevorzugt liegt das Verhältnis A : B möglichst nahe an 1 : 1.

Neben den Komponenten (a), (b), (c), (d) und (e) werden Monomere mit nur einer reaktiven Gruppe im allgemeinen in Mengen bis zu 15mol-%, bevorzugt bis zu 8 mol-%, bezogen auf die Gesamtmenge der Komponenten (a), (b), (c), (d) und (e) eingesetzt.

Die Polyaddition der Komponenten (a) bis (e) erfolgt im allgemeinen bei Reaktionstemperaturen von 20 bis 180°C, bevorzugt 50 bis 150°C unter Normaldruck oder unter autogenem Druck.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Zur Beschleunigung der Reaktion der Diisocyanate können die üblichen Katalysatoren, wie Dibutylzinndilaurat, Zinn-II-octoat oder Diazabicyclo-(2,2,2)-octan, mitverwendet werden.

Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist.

Wird die Reaktion in Substanz durchgeführt, eignen sich aufgrund der meist hohen Viskositäten und der meist nur kurzen Reaktionszeiten besonders Extruder, insbesondere selbstreinigende Mehrschneckenextruder.

Meistens werden die Dispersionen nach einem der folgenden Verfahren hergestellt:

Nach dem "Acetonverfahren" wird in einem mit Wasser mischbaren und bei Normaldruck unter 100°C siedenden Lösungsmittel aus den Komponenten (a) bis (e) ein anionisches Polyurethan hergestellt.

Es wird soviel Wasser zugegeben, bis sich eine Dispersion bildet, in der Wasser die kohärente Phase darstellt.

Das "Präpolymer-Mischverfahren" unterscheidet sich vom Acetonverfahren darin, daß nicht ein ausreagiertes (potentiell) anionisches Polyurethan, sondern zunächst ein Präpolymer hergestellt wird, das Isocyanat-Gruppen trägt. Die Komponenten (a) bis (d) werden hierbei so gewählt, daß das definitionsgemäße Verhältnis A:B größer 1,0 bis 3, bevorzugt 1,05 bis 1,5 beträgt. Das Präpolymer wird zuerst in Wasser dispergiert und anschließend durch Reaktion der Isocyanat-Gruppen mit Aminen, die mehr als 2 gegenüber Isocyanaten reaktive Aminogruppen tragen, vernetzt oder mit Aminen, die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Amingruppen hydrolysiert, die mit noch verbliebenen Isocyanatgruppen der Präpolymere unter Kettenverlängerung abreagieren.

Üblicherweise wird, falls bei der Herstellung des Polyurethans ein Lösungsmittel mitverwendet wurde, der größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% und sind ganz besonders bevorzugt frei von Lösungsmitteln.

Die Dispersionen haben im allgemeinen einen Feststoffgehalt von 10 bis 75, bevorzugt von 20 bis 65 Gew.-% und eine Viskosität von 10 bis 500 m Pas (gemessen bei einer Temperatur von 20°C und einer Schergeschwindigkeit von 250 $s^{-1}$).

Die erfindungsgemäßen wässerigen Dispersionen sind üblicherweise praktisch frei von mehrwertigen Metallionen.

Hydrophobe Hilfsmittel, die unter Umständen nur schwierig homogen in der fertigen Dispersion zu verteilen sind, wie beispielsweise Phenol-Kondensationharze aus Aldehyden und Phenol bzw. Phenolderivaten oder Epoxidharze und weitere z.B. in der DE-A-3903538, 43 09 079 und 40 24 567 genannten Polymere, die in Polyurethandispersionen beispielsweise als Haftungsverbesserer dienen, können nach den in den beiden oben genannten Schriften beschriebenen Methoden dem Polyurethan oder dem Präpolymeren bereits vor der Dispergierung zugesetzt werden. Geeignete hydrophobe Hilfsmittel sind beispielsweise in der DE-A-39 03 538, 40 24 567 und 43 09 079 genannt.

In einer Variante der vorliegenden Erfindung werden die erfindungsgemäßen Polyurethan-Dispersionen mit radikalisch polymerisierbaren Monomeren mit einer C=C-Doppelbindung modifiziert, die keine Isocyanatgruppen oder gegenüber Isocyanatgruppen reaktive Gruppen aufweisen (Monomere f). Dabei handelt es sich vor allem um die bei der Herstellung von Emulsionspolymerisationen üblicherweise eingesetzten Monomere.

Geeignete Monomere (f) sind z.B. die $C_1$-bis $C_6$-Alkylester der (Meth)acrylsäure sowie Laurylacrylat und Butandioldiacrylat oder carbonylgruppenhaltige Verbindungen, wie z.B. Methylvinylketon, (Meth)Acrolein, Crotonaldehyd, Diaceton(meth)acrylamid, Diaceton(meth)acrylat.

Weitere Monomere sind z.B. Vinylester von bis zu 20 C-Atome enthaltende Carbonsäuren wie Vinyllaurat, -stearat, Vinylacetat und Vinylpropionat, Vinylaromaten mit bis zu 20 C-Atomen wie Styrol und Vinyltoluol, ethylenisch ungesättigte Nitrile wie Acrylnitril und Methacrylnitril, ethylenisch ungesättigte Amide wie Acrylamid und Methacrylamid, Vinylhalogenide wie Vinylchlorid und Vinylidenchlorid und aliphatische Kohlenwasserstoffe mit 2 bis 8 C-Atomen und 1 oder 2 C=C-Doppelbindungen wie Butadien und Ethylen.

Das Monomer (f) kann während der Synthese des Polyurethans (A), vor der Dispergierung des Polyurethans (A) oder der wässerigen Dispersion, die das Polyurethan (A) enthält zugegeben werden und durch konventionelle Methoden radikalisch polymerisiert werden. Hierzu werden radikalbildende Polymerisationsinitiatoren zu der Mischung von der Polyurethan-Dispersion und dem Monomer (f) zugegeben. Ferner kann das Monomer (f) als Zulauf in einer initiatorhaltigen Polyurethandispersion zudosiert werden.

Falls eine Pfropfung des aus dem Monomer (f) gebildeten Polymer auf das Polyurethan gewünscht wird, empfiehlt es sich, bei der Synthese des Polyurethans Monomere mit einer radikalisch polymerisierbaren C=C-Doppelbindung mitzuverwenden.

Um eine Vernetzung des Polyurethans (A) zu bewirken, wird der wässerigen Dispersion üblicherweise ein Vernetzungsmittel (B), das funktionelle Substituenten aufweist, die mit den Struktureinheiten, die sich von Verbindungen der Formel (I) ableiten, in einer Additions- oder Kondensationsreaktion reagieren, hinzugefügt. Derartige Vernetzungsmittel (B) sind beispielsweise Verbindungen mit mindestens einer Aldehydgruppe oder mindestens 2 funktionellen Substituenten, ausgewählt aus einer Gruppe bestehend aus primärer Aminogruppe, sekundärer Aminogruppe, Hydrazingruppe, Hydrazidgruppe, Aminooxygruppe, Isocyanatgruppe oder blockierter Isocyanatgruppe.

Geeignete Polyamine sind z.B. nichtpolymere Amine, wie z.B. Ethylendiamin, Diethylentriamin, Triethylentetramin, Propylendiamin, Butylendiamin, 1,6-Hexandiamin, 1,12-Dodecandiamin, Cyclohexylendiamin, Piperazin, 2-Methylpiperazin, Isophorondiamin, Phenylendiamin, Tolylendiamin, Xylylendiamin, 4,4'-Diaminodiphenylmethan, Menthandiamin und m-Xylendiamin, Die reaktive Aminoverbindung kann auch ein Polymer sein, wie z.B. ein Aminogruppen enthaltendes Acryl-, Polyester- oder Polyurethanharz, ein Polypropylenoxyd mit Aminogruppen (Jeffamine), oder ein Polyethylenimin.

Diese Amine können auch in blockierter Form eingesetzt werden, also in Form ihrer Aldimine bzw. Ketimine. Diese

blockierten Amine sind allgemein bekannt und beispielsweise von K.J. Kim und R.C. Williams in "Proceedings of the annual Water-Borne and Higher Solids Symposium, New Orleans, 57, (1993)" und von B. Vogt-Birnbrich in "Proceedings of the 21st International Conference in Organic Coatings, Athen, 55, (1995)" sowie in EP-A-552469 und EP-A-584818 beschrieben. Bevorzugt werden mit aromatischen Aldehyden wie Benzaldehyd blockierte Amine verwendet.

Geeignete Polyhydrazide sind z.B. Dicarbonsäuredihydrazide wie sie beispielsweise in der EP-A-442 652, Seite 11, Zeile 52 bis Seite 12, Zeile 1 beschrieben sind. Diese leiten sich bevorzugt von Dicarbonsäuren, aus denen auch die Polyesterdiole, die als Komponente (b1) eingesetzt werden können, aufgebaut sind. Weiterhin können auch die entsprechenden Polyhydrazon-Derivate Verwendung finden, z.B. solchen, die sich von Aceton oder Butanon ableiten.

Weitere geeignete Polyhydrazide, die eine erhöhte Wasserlöslichkeit aufweisen, sind z.B. in der EP-A-629 657 beschrieben.

Weiterhin sind als Vernetzungsmittel (B) Polyisocyanate, die durch Umiminierung vernetzend wirken, ebenfalls geeignet. Solche Verbindungen werden beispielsweise in der DE-A-4121946 beschrieben.

Vernetzungsmittel mit Aminooxygruppen, die auch in Form ihrer Salze eingesetzt werden können, sind z.B. aus der EP-A-516 074 oder aus der DE-A-4219384 bekannt.

Eine weitere Vernetzungsmöglichkeit besteht in der Zugabe von Aldehyden mit einer oder mehreren Aldehydgruppen, die gegebenenfalls auch geschützt sein können, zu der erfindungsgemäßen Dispersion.

Geeignete Monoaldehyde sind z.B. Verbindungen der Formel X-$R^9$-CHO, in der $R^9$ ein $C_1$- bis $C_6$-Alkandiylrest und X ein Wasserstoffatom oder einen Hydroxycarbonylrest bedeutet. Bevorzugte Aldehyde sind Formaldehyd, Acetaldehyd und Benzaldehyd.

Als mehrfunktionelle Aldehyde eignen sich niedermolekulare Verbindungen, insbesondere aliphatische Aldehyde der Formel OCH-$(CH_2)_n$-CHO, worin n eine ganze Zahl von 0 bis 8, vorzugsweise von 0 bis 4 ist, wie Glyoxal oder Glutardialdehyd.

Man kann auch Oligomere, Polymere oder Copolymere von ethylenisch ungesättigten, radikalisch polymerisierbaren Aldehyden als Vernetzungskomponente einsetzen. Geeignete ethylenisch ungesättigte, radikalisch polymerisierbare Aldehyde sind z.B. Acrolein, Methacrolein, Formylstyrol und Hydroxymethylfurfuryl(meth)acrylat. Derartige Vernetzungskomponenten können, wenn sie nicht ausreichend löslich sind, in der wäßrigen Phase der Dispersion dispergiert sein und bei der Anwendung als Bindemittel an der Filmbildung teilnehmen. Oligomere oder polymere Vernetzungskomponenten dieser Art mit einem Molekulargewicht von 1000 bis 500 000 (Gewichtsmittelwert) sind bevorzugt.

Unter geschützten Aldehydgruppen werden entsprechende Derivate verstanden, die eine vergleichbare Reaktionsfähigkeit haben wie die freien Aldehydgruppen selbst. Geeignet sind z.B. Acetale, Mercaptale und Mercaptole, Dioxolane und Dithiolane. Acetal- bzw. Dioxolangruppen, die aus der Umsetzung von Aldehydgruppen mit Alkanolen mit 1 bis 4 Kohlenstoffatomen im Alkylrest oder mit Alkandiolen mit 2 oder 3 Kohlenstoffatomen im Alkylenrest entstanden sind, werden bevorzugt.

Beispiele von ungesättigten Monomeren mit geschützten Aldehydfunktionen sind Diethoxypropylacrylat und -methacrylat und Acryloyl- oder Methacryloyl-oxypropyl-1,3-dioxolan.

Weitere geeignete Aldehyd-Derivate sind Aldimin-Verbindungen, die durch die Umsetzung eines, gegebenenfalls substituierten, aromatischen oder heteroaromatischen Aldehyds mit einem, gegebenenfalls polyfunktionellen, primären Amin erhalten werden. Diese Verbindungen sind allgemein bekannt und sind z.B. in der EP 552 469 A3 oder in der US-P 5 451 653 beschrieben

Die Vernetzung kann auch über Michael Akzeptoren erfolgen. Geeignete Michaelakzeptoren sind allgemein bekannte Verbindungen die in der DE-A-42 37 492 beschrieben sind.

Im allgemeinen führt man die Vernetzung durch eine Michael-Addition in Anwesenheit eines Katalysators durch. Geeignete Katalysatoren sind Lewis-Basen oder Brönstedt-Basen, wie sie in der DE-A-42 37 492 beschrieben werden.

Die Mengen an Komponenten (A) und (B) werden bevorzugt so gewählt, daß das molare Verhältnis der Carbonylgruppen der von den Verbindungen der Formel (I) abgeleiteten Strukturelemente zu den funktionellen Substituenten der Verbindungen (B) 0,1 : 1 bis 10 : 1 bevorzugt 1,5:1 bis 0,5:1 beträgt.

Weitere geeignete Vernetzungsmittel (B) sind Aminoplastharze, z.B. Melamin-Formaldehyd-Kondensationsprodukte wie sie bei D.H. Solomon, The Chemistry of Organic Filmpolymers, S. 235 ff, John Wiley & Sons, New York, 1967, beschrieben sind. Es handelt sich bevorzugt um Melamin-Formaldehyd-Kondensationsharze mit einem Molekulargewicht von bevorzugt 250 bis 1000, besonders bevorzugt um ihre partiell bzw. vollständig veretherte Derivate. Der Veretherungsgrad beträgt vorzugsweise mindestens 45 % bezogen auf die maximal mögliche Veretherung. Die Melamin-Formaldehyd-Kondensationsprodukte sind mit Monoalkoholen von 1 bis 4 Kohlenstoffatomen, wie z.B. mit Methanol, Ethanol, Propanol und bevorzugt mit Butanol, und/oder Monoethern von Diolen mit insgesamt 2 bis 7 Kohlenstoffatomen verethert.

Die Melamin-Formaldehyd-Kondensationsprodukte können jedoch auch teilweise durch andere vernetzende Aminoplaste, wie sie z.B. in "Methoden der organischen Chemie" (Houben-Weyl), Bd. 14/2, Teil 2, 4. Auflage, Georg Thieme Verlag, Stuttgart 1963, S. 319 ff, beschrieben sind, ersetzt werden.

Weitere Vernetzungsmöglichkeiten ergeben sich auch mit Polyisocyanaten. Geeignete Isocyanatverbindungen sind insbesondere die allgemein bekannten handelsüblichen "High-solid-Isocyanate", hydrophilierten und/oder blokkierten Isocyanate (vgl. DE-A-4216536).

Geeignete Isocyanate sind die als Monomere (a) aufgeführten Isocyanate, die zum Aufbau des Polyurethans eingesetzt werden.

Darunter sind insbesondere die mehrwertigen Isocyanate mit mehr als 2 Isocyanatgruppen bevorzugt.

Als Blockierungsmittel für die Isocyanate kommen beispielsweise Alkohole und Oxime, z.B. Acetonoxim oder Methylethylketonoxim in Betracht.

Vernetzungsmittel (B) können weiterhin polymere Harze, die oximblockierte Isocyanatgruppen tragen, sein, wie sie in der DE-A-42 37 030, DE-A-33 45 448, WO 93/01245 und in US-Patent 5358997 beschrieben sind.

Die Vernetzung der Polyurethane (A), die in der erfindungsgemäßen wässerigen Dispersion enthalten sind, mit einem Polyisocyanat, erfolgt üblicherweise in Gegenwart eines basischen Katalysators, z.B. eines tertiären Alkylamins.

Mit Ausnahme der nicht blockierten Isocyanate und der Aldimine werden die erfindungsgemäßen Dispersionen im allgemeinen zu einem beliebigen Zeitpunkt vor der Verarbeitung mit dem Vernetzungsmittel vermischt. Es ist gleichfalls möglich, daß Vernetzungsmittel dem Polyurethan (A) auch schon vor dessen Dispergierung in Wasser zuzusetzen.

Die erfindungsgemäßen Dispersionen können auch weitere wasseremulgierbare oder -dispergierbare Harze, wie Polymer-, Polyurethan-, Polyester-, Epoxyd- oder Alkydharze sowie handelsübliche Hilfs- und Zusatzstoffe wie Treibmittel, Entschäumer, Emulgatoren, Verdickungsmittel, Verlaufsmittel und Thixotropiermittel, Farbmittel wie Farbstoffe und Pigmente enthalten.

Erfindungsgemäße Dispersionen, die als Vernetzungsmittel (B) eine Verbindung mit Aldehyd-, primären oder sekundären Amino-, Hydrazin-, Aminoxy-, Hydrazid- oder Ketoxim-blockierten Isocyanatgruppen enthalten, stellen sog. Einkomponenten-Systeme dar, da sie innerhalb eines beliebigen Zeitraumes nach ihrer Herstellung verarbeitet werden können.

Bei erfindungsgemäßen Dispersionen, denen als Vernetzungsmittel (B) eine Verbindung mit nicht-blockierten Isocyanatgruppen zugesetzt wurde, handelt es sich um sog. Zweikomponenten-Systeme, denn wegen des begrenzten Zeitraumes, innerhalb der die entsprechende Mischung verarbeitet werden sollte (ca. 8 Stunden), wird die Abmischung üblicherweise vom Verarbeiter der Dispersionen vorgenommen.

Die auf diese Weise hergestellten Beschichtungsmittel werden im allgemeinen nach den in der Lackindustrie üblichen Verfahren auf das zu beschichtende Werkstück aufgetragen, also beispielsweise durch Walzen, Spritzen, Streichen, Gießen, Tauchen.

Die anschließende Trocknung bzw. Aushärtung des Lacks kann sowohl durch Kalthärtung (d.h. durch Trocknung bei Temperaturen von 0 bis 80 °C, bevorzugt bei Raumtemperatur) oder nach dem sog. Einbrennverfahren (d.h. durch Trocknung üblicherweise bei Temperaturen von 80 bis 280°C) erfolgen.

Für die Kalthärtung eigenen sich vor allem Vernetzungsmittel mit Aldehyd-, Aldimin-, primären oder sekundären Amino-, Hydrazin-, Aminoxy- oder Hydrazidgruppen.

Es wird vermutet, daß die die Vernetzung bewirkenden Polyadditions- bzw. Polykondensationsreaktion bei diesen Systemen erst ablaufen, wenn ein großer Teil des Wassers verdampft ist. Die Beschichtungszusammensetzungen stellen deshalb ein einkomponentiges System aus Bindemittel und Vernetzer dar.

Die Kalthärtung läßt sich auch in Gegenwart von Vernetzungsmitteln (B) mit freien Isocyanatgruppen durchführen. Bei dieser Art der Verarbeitung sollte der Auftrag der erfindungsgemäßen Dispersion auf das Werkstück spätestens innerhalb eines Zeitraumes von ca. 8 Stunden nach der Vermischung mit dem Vernetzer erfolgen.

Bei der Verwendung von (hetero)aromatischen Aldimingruppen aufweisenden Vernetzungsmitteln (B) kann ebenfalls eine Kalthärtung durchgeführt werden. Die Lagerzeit der erfindungsgemäßen Dispersionen beträgt in diesem Falle je nach Zusammensetzung von einer Stunde bis zu mehreren Wochen.

Für den Fall, daß der Lack nach dem Einbrennverfahren verarbeitet werden soll, eignen sich als Vernetzungsmittel insbesondere die genannten Aminoplastharze, blockierte und nicht-blockierte Polyisocyanate und die Michael-Akzeptoren.

Eine gewisse Vernetzung des Polyurethans erfolgt unter den Bedingungen des Einbrennverfahrens auch bei Abwesenheit eines Vernetzers. Dies ist insbesondere dann der Fall, wenn die Vernetzung in Anwesenheit von den in der DE-A-42 37 492 beschriebenen Lewis- oder Brönstedt-Basen wie tertiären Aminen, z.B. 1,8-Diazabicyclo[5.4.0]undec-7-en (DBU) erfolgt.

Die erfindungsgemäßen Überzugsmittel eignen sich besonders für die Lackierung von Holz, Metall, Kunststoffen, für die Beschichtung von Papier, Leder, Textil, für die Herstellung von Formkörpern, Druckfarben und als Klebstoffe.

Die erfindungsgemäßen Dispersionen zeichnen sich dadurch aus, daß auch solche, die keine oder nur verhältnismäßig geringe Mengen an Verlaufsmittel enthalten, sich zu hochwertigen Lacküberzügen verarbeiten lassen.

Weiterhin lassen sich die erfindungsgemäßen Dispersionen sowohl als Ein- als auch als Zweikomponenten-System nach dem Verfahren der Kalthärtung als auch nach dem Einbrennverfahren verarbeiten. Dies ist für Verarbeiter, die verschiedene dieser insgesamt 4 Verarbeitungsvarianten anwenden, vorteilhaft, weil er für unterschiedliche Verarbeitungsverfahren nur eine geringe Zahl von Polyurethandispersionen bevorraten muß.

Daneben eignen sich wässerige Dispersionen, die das Polyurethan (A) enthalten, hervorragend für die Herstellung von Druckfarben.

Diese Druckfarben sind bevorzugt wie folgt zusammengesetzt:

(I) 15 - 30 Gew.-% eines Bindemittels, bestehend im wesentlichen aus dem Polyurethan (A) und dem Vernetzungsmittel (B)

(II) 7 bis 15 Gew.-% eines Pigments

(III) 2 bis 5 Gew.-% eines als Lösungsmittel geeigneten Alkohols

(IV) 4,5 bis 10 Gew.-% übliche Zusätze

(V) 45 bis 70 Gew.-% Wasser

Als Vernetzungsmittel (B) werden bevorzugt die vorstehend näher beschriebenen Polyhydrazide in den bereits genannten Mengenverhältnissen eingesetzt.

Bei den üblichen Zusätzen handelt es sich um Hilfsmittel und Zusatzstoffe, wie sie allgemein in Druckfarben eingesetzt werden, also beispielsweise Wachse, Antischaummittel, Dispergierungs- und Benetzungsmittel sowie Microzide.

Ansonsten handelt es sich bei den in den Druckfarben eingesetzten Komponenten (ii) bis (v) um die allgemein in Druckfarben eingesetzten, die beispielsweise aus Ullmann's Encyclopedia of Industrial Chemistry , 5th edition, Volume A22; 1993 VCH Publishers, Inc.; Seite 143 bis 155 bekannt sind.

Diese Druckfarben eignen sich insbesondere für das Bedrucken von Kunststoffolien wie Polyethylen- oder Polypropylenfolien, die eine Oberflächenspannung von 30 bis 50, bevorzugt 35 bis 40, besonders bevorzugt von 37 bis 39 mN/m (gemessen mit Wasser bei einer Temperatur von 23°C) aufweisen. Das Bedrucken kann nach den allgemein üblichen Verfahren erfolgen (vgl. loc. cit. S. 145 und 146).

Die Kunststoffolien mit derartigen Oberflächenspannungen sind handelsübliche Folien, die Corona-behandelt wurden.

Diese Druckfarben weisen in Kombination mit den empfohlenen Substraten ein günstiges Benetzungsverhalten auf. Die bedruckten Folien sind gegenüber üblichen mechanischen Beanspruchungen und Lösungsmitteln beständig.

Abkürzungen:

| | |
|---|---|
| ADDH: | Adipinsäuredihydrazid |
| IPDI | Vestanat® IPDI der Fa. Hüls / Isophorondiisocyanat |
| MHAA | N-(2-hydroxyethyl)acetoacetamid |
| MEK | Methylethylketon |
| TMP | Trimethylolpropan |
| Tl. | Gewichtsteile |
| MG | Molekulargewicht |
| i.O. | in Ordnung |

Beispiele

Dispersion 1

400 Tl. Polyester aus Adipinsäure, Isophthalsäure und Hexandiol-1,6 von MG 1000 (Molverhältnis der Säuren 1:1), 116,2 Tl. MHAA (Fa. LONZA), 40,2 Tl. DMPA, 36 Tl. Butandiol-1,4 und 452,4 Tl. IPDI wurden bei 90°C in 250 Tl. MEK umgesetzt. Nach 1h wurden 33,6 Tl. TMP zugegeben und 3h bei 90°C weiter umgesetzt. Nach Zugabe von 500 Tl. Aceton betrug der Isocyanatgehalt 0,92 % (Theorie 0,76 %). 30,4 Tl. Triethylamin, 1900 Tl. Wasser und 8,8 Tl. Diethylentriamin wurden nacheinander der hellgelben, transparenten Prepolymerlösung zugegeben, um eine milchig aussehende Dispersion zu bilden. Die Lösemittel wurden entfernt. Feststoffanteil 34,9 %. pH-Wert 7,6. Nach dreimonatiger Lagerung der Dispersion bei Raumtemperatur waren die Eigenschaften praktisch unverändert.

Dispersion 1a

Abmischung aus 100 Tl. Dispersion 1, 2.77 Tl. Adipinsäuredihydrazid und 20.8 Tl. Wasser; Stabile Dispersion.

Vergleichsdispersion 1

Vegleichsdispersion 1 wurde analog Dispersion 1 hergestellt mit dem Unterschied, daß an Stelle von MHAA 92,9 Tl. Diacetonalkohol verwendet wurden. 3 Stunde nach TMP-Zugabe betrug der NCO-Wert 2,65 % (Theorie 1,03 %); nach weiteren 2h betrug der NCO-Wert immer noch 2,43%.

Vergleichsdispersion 1a

Bei Vergleichsdispersion 1a wurde das Verfahren zur Herstellung von Vergleichsdispersion 1 variiert. Diacetonalkohol und IPDI wurden zunächst allein bei 90°C umgesetzt. Nach 2h wurden der Polyester, Hexandiol-1,6, DMPA und MEK zugegeben. Nach 1h wurde TMP addiert. 3h nach der TMP-Zugabe betrug der NCO-Gehalt 1,11 %. Der Ansatz wurde mit Aceton verdünnt, die Lösung in der Folge mit Triethylamin, Wasser und Diethylentriamin zur Ausbildung einer milchig ausehenden Dispersion. Die Lösemittel wurden entfernt. Feststoffanteil 30,8 %. pH-Wert 8,3.

Nach ca. einer Woche Lagerung bei Raumtemperatur hatte sich die Dispersion in Feststoff und Serum getrennt. In dem Kunststoffbehälter, in dem die Dispersion gelagert worden war, hatte sich ein Überdruck gebildet.

Dispersion 2

Dispersion 2 wurde analog Dispersion 1 aus folgenden Stoffmengen hergestellt: 400 Tl. Polyester, 53,7 Tl. DMPA, 22,5 Tl. Butandiol-1,4, 116,1 TL. MHAA, 441,3 Tl IPDI, 33,6 Tl. TMP, 40,5 Tl. Triethylamin und 8,8 Tl. Diethylentriamin. Es entstand eine klare, leichtgelbliche Dispersion. Feststoffanteil 33,4%. pH-Wert 8,3.

Vergleichsdispersion 2

Vergleichsdispersion 2 wurde analog Dispersion 2 hergestellt mit dem Unterschied, daß an Stelle von MHAA 70.5 Tl. 4-Hydroxy-2-butanon verwendet wurden. Im Laufe der Prepolymersynthese verfärbte sich die Lösung intensiv braun bis schwarz.

Dispersion 3

Dispersion 3 wurde analog Dispersion 1 aus folgenden Stoffmengen hergestellt: 400 Tl. Polyester aus Adipinsäure, Isophthalsäure und Hexandiol-1,6 von MG 1000 (Molverhältnis der Säuren 1:1), 58,1 Tl. MHAA (Fa. Lonza), 46,44 Tl. Hydroxyethylacrylat, 40,24 Tl. DMPA, 36,1 Tl. Butandiol-1,4, 452,4 Tl. IPDI, 33,6 Tl. TMP, 30,4 Tl. Triethylamin und 8,8 Tl. Diethylentriamin. Es entstand eine opake Dispersion. Feststoffanteil 35,4 %. pH-Wert 7,9

Prüfergebnisse

| Lösemittelbedarf bei Dispersion 1a: 0 | | | | | |
|---|---|---|---|---|---|
| Beispiel | 0,5h | 1h | 7h | 1d | 7d |
| Dispersion 1a | 34 | 45 | 67 | 71 | 110 |

In der Tabelle angegeben ist die Oberflächenhärte in Abhängigkeit von der Zeit.

Alkohol- Weichmacher- und Wasserdampfprüfungen (0 bis 5; 0= beste Note)

| Beispiel | Alkohol-visuell Sofort / 1h / 1d | Weichmacher-visuell Sofort / 1h / 1d | Wasserdampf Sofort / 1h / 1d |
|---|---|---|---|
| Dispersion 1a | 4 / 2-3 / 0-1 | 2-3 / 2-3 / 0-1 | 2-3/ 2-3 / 1 |
| Glanzprüfung:<br>Dispersion 1a: 79 % | | | |

| Lackprüfung bei Dispersion 3 | | | | | | |
|---|---|---|---|---|---|---|
| Lacktrocknung | Glanz (visuell) | Gitterschnitt (0-5*) | Pendelhärte (sek) | Aceton-Test (Anzahl DH) | $H_2SO_4$-Test 28 %ig 4h/60°C (0-5*) | $H_2SO_4$-Test 38 %ig 24h/RT (0-5*) |
| 30-60°C | i.O. | 2-3 | 102 | 4 | 4 | 0 |
| 30-80°C | i.O. | 2 | 115 | 3 | 4 | 0 |
| 30-100°C | i.O. | 2-3 | 112 | 3 | 4 | 0 |
| 30-120°C | i.O. | 0-1 | 122 | 5 | 4 | 0 |
| 30-140°C | i.O. | 0-1 | 134 | 10 | 2 | 0 |
| 30-160°C | i.O. | 0-1 | 153 | 45 | 0 | 0 |

Die Prüfungen wurden auf folgende Weise durchgeführt

Lösemittelbedarf

Die Dispersionen wurden auf Glasplatten mit einer Trockenschichtdicke von ca. 25µm mit soviel Lösungsmittel versetzt, wie erforderlich ist, um nach der Trocknung eine fehlerfreie Filmoberfläche zu erhalten. Die hierfür erforderliche Mindestmenge ist in Gew.-% angegeben.

Oberflächenhärte

Die Oberflächenhärte (Pd-Härte) wurde nach DIN 53157 mit einem König-Gerät bestimmt. In der Tabelle ist die Anzahl der Aufschläge wiedergegeben. Die Messungen wurden zu verschiedenen, in der Tabelle angegebenen Zeiten nach dem Aufrakeln der Dispersionen durchgeführt.

Wasserdampf-, Alkohol- und Weichmacherprüfung

Diese Prüfungen wurden nach DIN 68860B an zweischichtigen Lackierungen auf Holz durchgeführt. Die visuelle Beurteilung erfolgte sofort (sof.) und 1 h nach Ende der Belastung. Die Beurteilung erfolgte nach Schulnoten: 0 = beste Note, 5 = schlechteste Note.

Glanzgrad

Die Bestimmung des Glanzgrades erfolgte nach DIN 67 530 an zweischichtigen Lackierungen auf Holz mit Hilfe eines Normrefraktometers Laborsond der Fa. Byk bei einem Winkel von 60°C.

Verfilmung auf Blech

Die Dispersion wurde mit einem Filmziehrahmen auf Blechteile der Qualität St 1405 mit einer Schichtdicke von

150-200 µm naß aufgezogen, 10 Minuten bei Raumtemperatur vorgetrocknet und anschließend eingebrannt.

Erichsentiefung

Die Prüfung erfolgte nach ISO 1520.

Gitterschnitt

Die Prüfung erfolgte nach DIN 53 151.

Oberflächenhärte

Die Filmhärte (Pendelhärte) wurde nach DIN 53 157 mit einem König-Gerät bestimmt. Es wurde die Zeit in Sekunden ermittelt.

Acetontest

Ein mit Lösungsmittel getränkter Wattepfropfen wurde auf einer ausgewählten Lackstelle des beschichteten Blechs unter leichtem Andrücken hin und her (1 x hin, 1 x her = 1 Doppelhub DH). Diese Prüfung erstreckte sich über 50 bis 100 DH. Sofern der Film bis dahin nicht abgetragen wurde, gilt der Film als vernetzt bzw. ausgehärtet.

Schwefelsäuretest 28 %ig

Die Durchführung der Prüfung erfolgte nach Vorgabe der Firma Dr. Kurt Herberts (DKH), Wuppertal, auf folgende Weise: ein kleiner Wattepfropfen, der in 28 %iger Schwefelsäure getränkt worden war, wurde auf den Prüfling aufgelegt. Nach 4 Stunden im Umlufttrockenschrank bei 60°C wurde die Probe dann nach DIN 53 230 Tab. 1 beurteilt (von 0 bis 5; 0 = sehr gut, 5 = schlecht).

Schwefelsäuretest 38 %ig

Die Durchführung der Prüfung erfolgte analog Methode "Schwefelsäuretest 28 %ig, wobei die Lagerung 24 Stunden bei Raumtemperatur durchgeführt wurde.

**Patentansprüche**

1. Wässerige Dispersionen, enthaltend ein Polyurethan (A), mit Struktureinheiten, welche sich von Verbindungen der Formel (I)

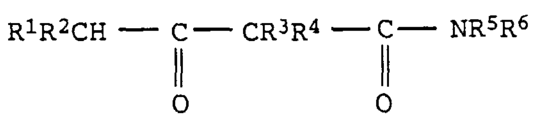

I

ableiten, in der die Substituenten die folgende Bedeutung haben:

$R^1$, $R^2$, $R^3$ jeweils Wasserstoff, $C_1$- bis $C_{24}$-Alkyl oder $C_6$- bis $C_{24}$-Alkenyl

$R^4$ Wasserstoff

$R^5$, $R^6$

a) gemeinsam $C_4$- bis $C_{10}$-Alkandiyl,

b) jeweils $C_2$- bis $C_{10}$-Alkyl, $C_5$- bis $C_8$-Cycloalkyl oder $C_7$- bis $C_{20}$-Aralkyl,

c) jeweils ein hydroxylterminiertes Poly-($C_2$- bis $C_4$-alkylenoxid), oder

d) ein Rest $R^5$ oder $R^6$ die unter (a) bis (c) angegebene Bedeutung und der andere Rest Wasserstoff oder ein Rest der Formel II

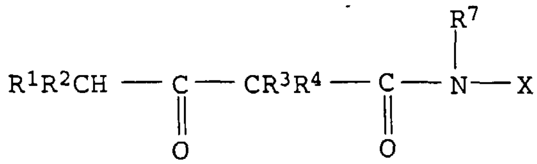

II

in der

X $C_2$- bis $C_6$-Alkandiyl bedeutet und

$R^7$ gleichbedeutend ist mit $R^5$ oder $R^6$ mit der Ausnahme, daß $R^7$ nicht ein Rest der Formel II bedeutet,

wobei

- die Reste $R^5$ und $R^6$ in jedem der Fälle (a) bis (d) insgesamt eine (1) an ein aliphatisches C-Atom gebundene Hydroxylgruppen tragen,
- gegebenenfalls der Rest $R^5$ und/oder $R^6$ 1 oder 2 aromatisch gebundene Hydroxylgruppen oder 1 Nitril-, tertiäre Amino-, Carbonsäure- oder Sulfonsäuregruppe, die gegebenenfalls in Form ihrer Salze vorliegen, trägt, und
- die mittlere Funktionalität (F) aller Aufbaukomponenten des Polyurethans (A), bezogen auf die Funktionalitäten, die beim Aufbau des Polyurethans (A) in einer Additionsreaktion miteinander reagieren, 1,5 bis 2,2 beträgt.

**2.** Polyurethandispersionen nach Anspruch 1, wobei die mittlere Funktionalität (F) 1,7 bis 2,0 beträgt.

**3.** Polyurethandispersionen nach Anspruch 1 oder 2, wobei der Gehalt der Carbonylgruppen der von den Verbindungen der Formel (I) abgeleiteten Strukturelementen in dem Polyurethan 3 bis 140 mmol pro 100g Polyurethan (A) beträgt.

**4.** Verfahren zur Herstellung von Polyurethandispersionen nach den Ansprüchen 1 bis 3, umfassend die Verfahrensschritte

I. Herstellung eines Polyurethans oder Isocyanatgruppentragenden Polyurethanpräpolyers durch Umsetzung von

a) mehrwertigen Isocyanaten mit 4 bis 30 C-Atomen,

b) Polyolen, von denen

b1) 10 bis 100 mol-%, bezogen auf die Gesamtmenge der Polyole (b), ein Molekulargewicht von 500 bis 5000 aufweisen und

b2) 0 bis 90 mol-%, bezogen auf die Gesamtmenge der Polyole (b), difunktionell sind und ein Molekulargewicht von 62 bis 500 g/mol aufweisen,

c) Verbindungen der Formel I,

d) gegebenenfalls weiteren von den Monomeren (b) und (c) verschiedenen mehrwertigen Verbindungen mit reaktiven Gruppen, bei denen es sich um alkoholische Hydroxylgruppen oder primäre oder sekundäre Aminogruppen handelt und

e) von den Monomeren (a), (b), (c) und (d) verschiedenen Monomeren mit wenigstens einer Isocyanatgruppe oder wenigstens einer gegenüber Isocyanatgruppen reaktiven Gruppe, die darüberhinaus wenigstens eine hydrophile Gruppe oder eine potentiell hydrophile Gruppe tragen, wodurch die Wasserdispergierbarkeit der Polyurethane bewirkt wird,

II. Dispergierung des in Schritt I erhaltenen Polyurethans bzw. des Isocyanatgruppen-tragenden Polyurethanpräpolymers in Wasser.

**5.** Wässerige Dispersionen nach den Ansprüchen 1 bis 3, enthaltend zusätzlich zum Polyurethan (A) ein Vernetzungsmittel (B) mit mindestens einer Aldehydgruppe oder mindestens 2 funktionellen Substituenten, ausgewählt aus einer Gruppe bestehend aus primäre Aminogruppe, sekundäre Aminogruppe, Hydrazingruppe, Hydrazidgruppe, Isocyanatgruppe, blockierte Isocyanatgruppe und Aminooxygruppe.

**6.** Wässerige Dispersionen nach Anspruch 5, wobei die Mengen an Komponente (A) und (B) so gewählt werden, daß das molare Verhältnis der Carbonylgruppen der von den Verbindungen der Formel (I) abgeleiteten Strukturelemente zu den funktionellen Substituenten des Vernetzungsmittels (B) 0,5 : 1 bis 5 : 1 beträgt.

**7.** Wäßrige Dispersionen nach den Ansprüchen 1 - 6 enthaltend

(I) 15 - 30 Gew.-% eines Bindemittels, bestehend im wesentlichen aus dem Polyurethan (A) und dem Vernetzungsmittel (B)

(II) 7 bis 15 Gew.-% eines Pigments

(III) 2 bis 5 Gew.-% eines als Lösungsmittel geeigneten Alkohols

(IV) 4,5 bis 10 Gew.-% übliche Zusätze

(V) 45 bis 70 Gew.-% Wasser

**8.** Wäßrige Dispersionen nach Anspruch 7, enthaltend als Vernetzungsmittel (B) Polyhydrazide.

**9.** Verfahren zur Beschichtung von Holz, Glas, Kunststoff, Leder, Papier oder Metall, dadurch gekennzeichnet, daß man eine wässerige Dispersion nach den Ansprüchen 5 bis 8 auf eines der genannten Substrate aufbringt und trocknet.

**10.** Verfahren zum Bedrucken von Papier oder Metall- oder Kunststoffolien, dadurch gekennzeichnet, daß man sie mit einer Dispersion gemäß Anspruch 7 oder 8 bedruckt.

**11.** Verfahren gemäß Anspruch 10, dadurch gekennzeichnet, daß es sich um eine Kunststoffolie mit einer Oberflächenspannung von 30 bis 50 mN/m handelt.

**12.** Gegenstände, erhältlich nach den Verfahren nach den Ansprüchen 9 bis 11.

Europäisches Patentamt

# EUROPÄISCHER RECHERCHENBERICHT

Nummer der Anmeldung
EP 97 11 9152

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 649 865 A (HOECHST AG)<br>* Ansprüche 1,6,9,12,13 * | 1,5-10 | C08G18/83<br>C08G18/12<br>C08G18/50<br>C08G18/38 |
| D,P,<br>X | DE 196 18 675 A (BASF AG)<br>* Ansprüche * | 1-12 | |
| D,A | EP 0 442 652 A (ICI PLC)<br>* Seite 11, Zeile 52 - Zeile 59; Ansprüche 1-3,13,20,23,24 * | 1-9 | |

RECHERCHIERTE SACHGEBIETE (Int.Cl.6)

C08G

Der vorliegende Recherchenbericht wurde für alle Patentansprüche erstellt

| Recherchenort | Abschlußdatum der Recherche | Prüfer |
|---|---|---|
| BERLIN | 25.Februar 1998 | Angiolini, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)